Europäisches Patentamt

European Patent Office

Office européen des brevets

(19)

(11) Publication number: **0 299 943**

**A1**

(12) # EUROPEAN PATENT APPLICATION

(21) Application number: **88870118.2**

(22) Date of filing: **07.07.88**

(51) Int. Cl.⁴: **A 23 G 1/21**
A 23 G 1/22, A 23 G 3/20,
A 23 G 3/00

(30) Priority: **13.07.87 BE 8700775**

(43) Date of publication of application:
**18.01.89 Bulletin 89/03**

(84) Designated Contracting States:
**BE CH DE FR GB LI LU NL**

(71) Applicant: **ITALO-SUISSE**
**Avenue des Châteaux 107a**
**B-7780 Comines (BE)**

(72) Inventor: **Libeert, Luc**
**Avenue des Châteaux 107**
**B-7780 Comines (BE)**

(74) Representative: **Pieraerts, Jacques et al**
**Bureau Gevers S.A. rue de Livourne 7 bte 1**
**B-1050 Bruxelles (BE)**

(54) **A mould for manufacturing chocolate objects having at least two different colors, and a method to be applied therewith.**

(57) A mould for manufacturing chocolate objects having at least two different colours, characterized in that the mould comprises two parts, a first (1) one comprising an engraved side (5) and a second (2) one a cavity, means for bringing with its cavity the part (2) showing a cavity towards the engraved side (5) of the other part and means for connecting the two parts (1 and 2) with each other and for rotating the two thus connected parts (1 and 2) around a common axis.

Fig.3.

## Description

**A mould for manufactoring chocolate objects having at least two different colours, and a method to be applied therewith**

The invention relates to a mould for manufacturing chocolate objects having at least two different colours.

The invention also relates to a method to be applied therewith.

The object of the invention is to realize a mould and a method to be applied therewith, according to which, preferably hollow, chocolate products having at least two different colours, for example white and brown, can be manufactured under excellent conditions.

It is more particularly an object of the invention to realize a mould and a method according to which the contrast between the two chocolates can be clearly seen in order that there is obtained a product having two colours with an exceptionally good achievement.

In order to realize that object a mould according to the invention is characterized in that mould comprises two parts, a first one comprising an engraved side and a second one a cavity, means for bringing with its cavity the part showing a cavity towards the engraved side of the other part and means for connecting the two parts with each other and for rotating the two thus connected parts around a common axis.

In a preferred embodiment of the invention said parts are hinged connected with each other.

The method according to the invention is characterized in that melted chocolate is poured in the first engraved part of the mould and that said engraved side thereof is stripped off, and wherein said melted chocolate is experienced to a begin of cooling or solidification, and in that the melted chocolate is poured in the second part of the mould and that both parts of the mould are brought over each other by means of a turn of at least one of those parts and that they are kept closed in that position, after which both parts are rotated around a common axis until the melted chocolate, poured in the second part, is completely spread out over the engraved side and the wall of said cavity by means of rotation of the mould, after which the mould is sufficiently cooled in order to enable the removing of the chocolate objects out of the mould.

Preferably the mould is exposed to vibrations during the rotation thereof.

Further details and advantages of the invention will become clear in the description of a mould for manufacturing chocolate objects having at least two different colours and of a method to be applied therewith. The description is only given by way of example and does not limit the invention. The reference signs relate to the annexed figures.

Figure 1 is a schematic view, in their open state, of the two parts of the mould according to the invention, before the two chocolate masses are poured therein.

Figure 2 is a schematic view of the two parts of the mould according to the invention, after the two chocolate masses have been poured therein and after the strip off of the chocolate mass on the engraved side of one of the parts.

Figure 3 is a schematic view, in their closed state, of the two parts of the mould according to the invention with the chocolate mass unequally distributed over the inner surface of the cavity of one of the parts belonging to the mould according to the invention and distributed over the engraved side of the other part of the same mould.

Figure 4 is a cross-section of an achieved product.

The mould represented by those figures, comprises a first 1 and a second 2 part which are hinged connected with each other.

It will be clear that the hinged connection given by way of example can comprise a plurality of different embodiments.

It is an object of the invention to manufacture a chocolate object that is composed of two different chocolate masses, for example brown and white chocolate, or of two different brown coloured chocolate masses.

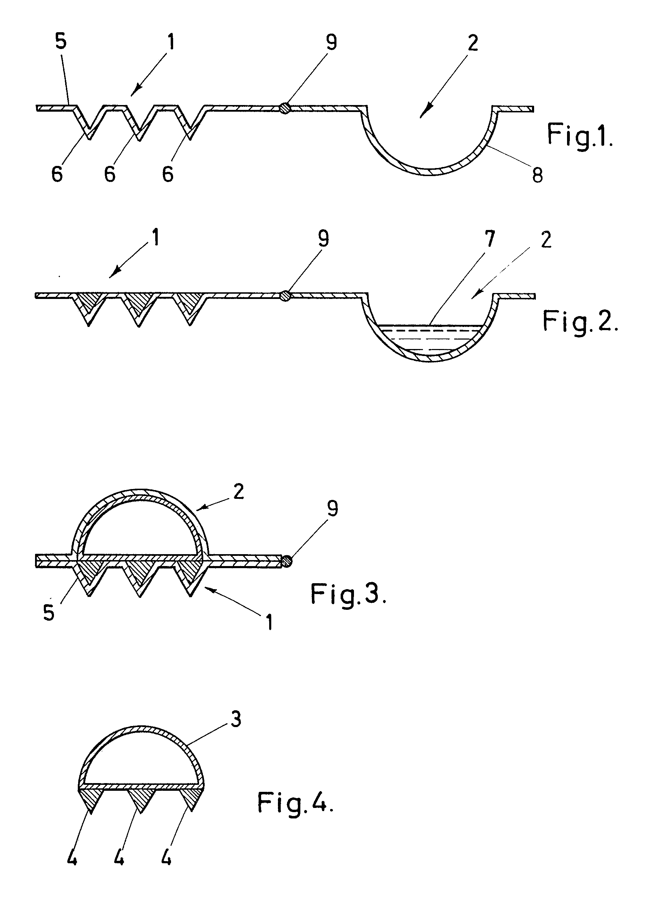

In the example given in the figures a hollow object is manufactured, which comprises a hollow part 3 of one colour having a relief pattern 4 of another colour (figure 4).

Side 5 of the first part 1 is engraved. That side shows for example a series of elongated cavities 6 which has to be understood as the negative of the relief pattern 4. It will also be clear that this relief can show every possible pattern.

The cavities 6 are filled with melted chocolate and the side 5 wherein those cavities 6 are provided are than stripped off by means of a spreader or a comparable object. By an acurate stripping of the side 5 the chocolate, for example the white one, which is in the cavities 6, is not touched. In the second part of the mould, notably the part 2, there is poured a chocolate mass having a different colour, for example brown chocolate.

The amount of the chocolate poured in the cavity of the second part 2 of the mould is referred with 7. The amount must be enough to extend along the wall 8 of the cavity of the second part 2, even as over the side 5 and the cavities 6 filled with white chocolate. That extension takes place when part 2 is brought towards part 1 and during the further rotation around the longitudinal axis of the mould.

The two parts 1 and 2 of the mould are indeed, according to a preferred embodiment, hinged connected to each other. The hinged connection extends for example along the axis 9 between the parts 1 and 2 of the mould.

The closed mould, i.e. the mould as showed in figure 3, is than turned around a geometrical axis which is not showed in the figures, but which will be determined, during experiments, in such a manner that the closed mould can be turned around its geometrical axis. That turn around or "spinning" is executed so long until a uniform layer of chocolate is spread over the complete wall 8 of the cavity in part 2 even as, as already explained hereabove, over the side 5 of part 1 of the mould. During the recovering over the flat side 5 of the part 1 of the mould, a contact with the already hardened chocolate in the cavities 6 of part 1 is established.

During the spinning the mould can also be exposed to vibrations. This is done by a temperature which is preferably comprised between ± 20° and 25° C. After which the chocolate mass, and thus also the mould wherein it is poured, is cooled until the achieved product can be removed from both parts of the mould.

The achieved product has in cross-section a profile which is shown in Figure 4. There has already been set out that all kind of mould can be realized. The same is valid for the relief created by the shape of the cavities 6, and also for the cross-section of the cavity of which the wall 8 of that part 2 of the mould is illustrated.

It is also clear that the parts 1 and 2 show the same dimensions. This signifies that by turn around of the part 2 towards part 1 (or vice versa) there must be sufficient sealing of the mould in order to prevent the melted chocolate to escape out of the mould and to cause undesired flashforming.

It is evident that the men skilled in the art will establish the correct temperature, as well for the mould, the melted chocolate, as for the cooling process of the mould and the chocolate.

From the description given hereabove, and the method to be applied therewith, it can be derived that all the steps can be executed either manually or automatically. It is also clear that two or more coloured products can be obtained which have a very accurate look thanks to the described method and by using a mould according to the invention.

It is evident that the invention, as well with respect to the mould, as with respect to the method, is not limited to the embodiment described by way of example and that modifications can be applied thereto whithout leaving the scope of the present patent application.

## Claims

1. A mould for manufacturing chocolate objects having at least two different colours, characterized in that the mould comprises two parts, a first (1) one comprising an engraved side (5) and a second (2) one a cavity, means for bringing with its cavity the part (2) showing a cavity towards the engraved side (5) of the other part and means for connecting the two parts (1 and 2) with each other and for rotating the two thus connected parts (1 and 2) around a common axis.

2. A mould as claimed in claim 1, characterized in that said parts (1 and 2) are hinged connected with each other.

3. A method for manufacturing by using a mould according one of the claims 1 or 2, chocolate object having at least two different colours, characterized in that melted chocolate is poured in the first engraved part (1) of the mould and that said engraved side thereof (5) is stripped off, and wherein said melted chocolate is experienced to a begin of cooling or solidification, and in that the melted chocolate is poured in the second part of the mould and that both parts of the mould are brought over each other by means of a turn of at least one of those parts and that they are kept closed in that position, after which both parts (1) and (2) are rotated around a common axis until the melted chocolate, poured in the second part (2), is completely spread out over the engraved side and the wall of said cavity by means of rotation of the mould, after which the mould is sufficiently cooled in order to enable the removing of the chocolate objects out of the mould.

4. A method as claimed in claim 3, characterized in that the mould is exposed to vibrations during the rotation thereof.

0299943

Fig.1.

Fig.2.

Fig.3.

Fig.4.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X,Y | US-A-1 932 298 (A.E.VAN EMDEN) <br> * Figures 1-4; pages 1,2 * <br> --- | 1,2,3,4 | A 23 G 1/21 <br> A 23 G 1/22 <br> A 23 G 3/20 <br> A 23 G 3/00 |
| A | US-A-1 865 097 (D.C.GILHAM) <br> * Pages 1,2; figures 1-4 * <br> --- | 1,2 | |
| A | DE-A-3 342 069 (H.RIEGELEIN) <br> --- | | |
| Y | FR-A-2 466 200 (R.DOPPLER) <br> * Claims 1,2; figures 1,2; page 4, lines 9-20 * <br> --- | 1,2,3,4 | |
| A | FR-A-1 573 747 (WALTER HÖRNLEIN METALLWARENFABRIK) <br> --- | | |
| A | US-A-3 556 022 (S.B.WESTIN) <br> * Columns 1,2 * <br> --- | 1,2 | |
| A | FR-A-2 420 924 (R.DOPPLER) <br> --- | | |
| A | GB-A- 983 575 (J.OLDHAM) <br> --- | | TECHNICAL FIELDS SEARCHED (Int. Cl.4) |
| A | FR-E- 17 750 (LETANG & FILS) <br> --- | | A 23 G |
| A | US-A-2 796 033 (E.FEINSTEIN) <br> --- | | |
| A | FR-A-2 266 431 (L.M.RAITH-MOOR) <br> --- | | |
| A | FR-A-1 125 648 (N.L.COUSTON) <br> ----- | | |

The present search report has been drawn up for all claims

| Place of search | Date of completion of the search | Examiner |
|---|---|---|
| THE HAGUE | 18-10-1988 | GUYON R.H. |